# EUROPEAN PATENT SPECIFICATION

(11) **EP 0 768 161 B1**
(45) Date of publication and mention of the grant of the patent: **12.03.2003**
(21) Application number: 96115805.2
(22) Date of filing: 02.10.1996
(51) Int. Cl.: B29C 45/14, A43C 11/14

(54) **Method for producing a fastening device and product obtained with said method**
Verfahren zur Herstellung einer Verschlussvorrichtung und mit diesem Verfahren hergestelltes Produkt
Procédé pour la fabrication d'un dispositif de fermeture et produit obtenu par ce procédé

(30) Priority: 10.10.1995 IT TV950118
(43) Date of publication of application: 16.04.1997
(73) Proprietor: BENETTON GROUP S.p.A., 31050 Ponzano Veneto (Treviso) (IT)
(72) Inventor: Gorza, Roberto, 32032 Feltre (Prov. of Belluno) (IT)
(74) Representative: Modiano, Guido, Dr.-Ing.

(56) References cited:
- CH-A- 449 470
- DE-A- 2 633 583
- DE-A- 3 041 468
- FR-A- 2 548 296
- GB-A- 849 899
- US-A- 3 013 308
- US-A- 4 295 814
- US-A- 4 786 454

## Description

The present invention relates to a method for producing a fastening device and to the product obtained with said method.

Fastening devices are used, for example, in sports shoes such as ski boots, roller skates, ice skates, or mountain boots, and are generally constituted by levers having a plurality of separate interconnected elements cooperating with each other to join the flaps of the shoe.

Italian Utility Model Patent No. 182322 discloses a closure device that comprises a lever element that is pivoted, at one end, at one of the flaps to be fastened, the end of a traction element being articulated to a median portion of the element, the traction element being provided with a hook member at the other end.

The hook member can be coupled in an engagement seat provided at the other flap of the shoe to be fastened. The traction element has means for adjusting its useful length and at least one substantially flexible portion.

The elements that constitute the device are all made of aluminum or might be made of plastics, according to the requirements linked to the shoe on which they are used.

If the elements are made of aluminum, they are obtained by stamping adapted plates; this step is followed by other treatments adapted to complete each individual element according to desired aesthetic and mechanical requirements.

If some elements must be made of plastics, they are obtained by means of injection molds. As in the previous case, the various elements, once they have been obtained by molding, can be subjected to further working to complete them from the mechanical or aesthetic point of view.

In any case, regardless of whether the components are made of plastics or of aluminum, they must be mutually assembled by using additional elements, such as for example pins wherever it is necessary to obtain a rotation or connecting elements such as protrusions, snap-together seats, or others.

Essentially, conventional fastening devices, particularly for sports shoes, are all composed of a plurality of separate structural elements with the addition of further elements that are required to achieve the mutual connection of the first ones.

This conventional method has considerable drawbacks: it entails producing the individual parts, then finishing them aesthetically and structurally, and assembling the various parts together with a sequence of operating steps, most of which are manual. Furthermore, each step requires a certain time and accordingly contributes to increase the overall costs of the device.

The aim of the present invention is therefore to solve the described technical problems, eliminating the drawbacks of the cited prior art by providing a method that allows to produce fastening devices, such as for example levers for sports shoes, with a low cost and in a short time.

Within the scope of this aim, an important object is to reduce the number of components that constitute the fastening device.

Another important object is to provide a method that allows to reduce the number of machines required for the treatments for producing the fastening device.

Another important object is to provide a method that allows to reduce the treatment steps required to obtain the fastening device in a configuration that is complete and therefore ready to be assembled to the shoe.

Another important object is to provide a method that allows to obtain a fastening device that can be stored more easily and is very easy to install on shoes.

Another important object is to provide a method that allows to obtain a product that has very low production costs.

Another object is to provide a method that allows to obtain a product, such as a fastening device for sports shoes, that is reliable and safe in use, has low manufacturing costs, and allows to achieve optimum adaptability to the particular region in which it is placed on the shoe.

In accordance with the invention, there is provided a method for producing a fastening device, and a fastening device itself, as defined in the appended claims.

Further characteristics and advantages of the invention will become apparent from the detailed description of a particular but not exclusive embodiment, illustrated only by way of non-limitative example in the accompanying drawings, wherein:

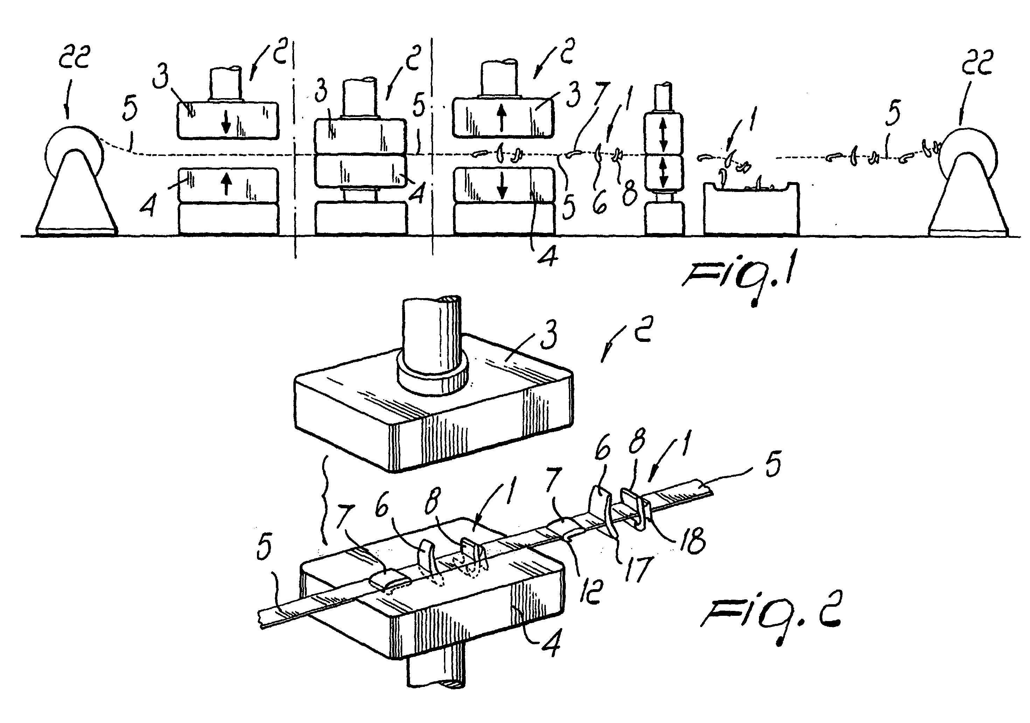

figure 1 is a schematic side view of the producing line for the method according to the invention;
figure 2 is a schematic view of the device obtained after the injection-molding step;
figure 3 is a sectional side view of the device;
figures 4 and 5 are views of the device associated with the flaps of a shoe, in the closed condition and in an intermediate closure condition;
figure 6 is a top view of the device in the condition shown in figure 4;
figure 7 is a lateral perspective view of the device in the position of figure 4;
figures 8 and 9 are side views of the device according to further embodiments.

With reference to the above figures, the method for producing a fastening device, designated by the reference numeral 1, comprises a first injection-molding step, performed by means of a mold 2 that is constituted by an upper part 3 and a lower part 4, wherein adapted seats are provided for forming the fastening device 1 after the injection step.

Said first injection-molding step occurs at a flexible connecting element, such as a tape or cable 5, that is inserted at the mold 2.

The first injection-molding step produces at least two elements that constitute the fastening device 1; to this purpose, the accompanying drawings illustrate further embodiments, which entail for example the production of a lever arm 6, of a traction element 7, and optionally of a support 8 for the articulation of the lever arm 6, said support 8 having means for locking to a first flap 9 of a shoe.

The lever arm 6 is overlap injection-molded on the tape or cable 5, and the traction element 7 is also overlap injection-molded, at an adapted distance, on the tape or cable 7. Optionally, on the opposite side with respect to said traction element it is possible to overlap injection-mold the support 8, as shown in figure 3.

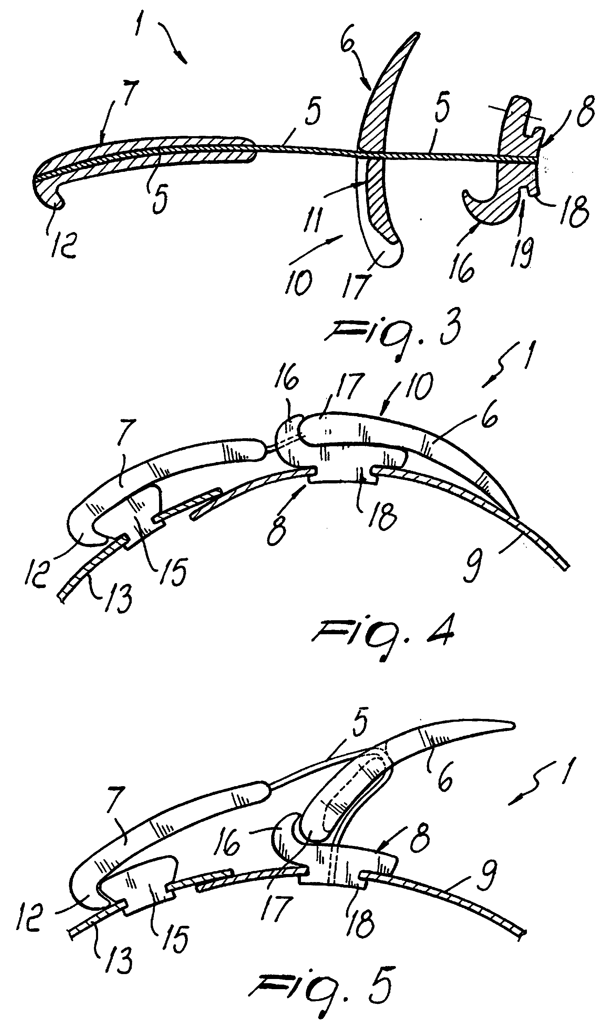

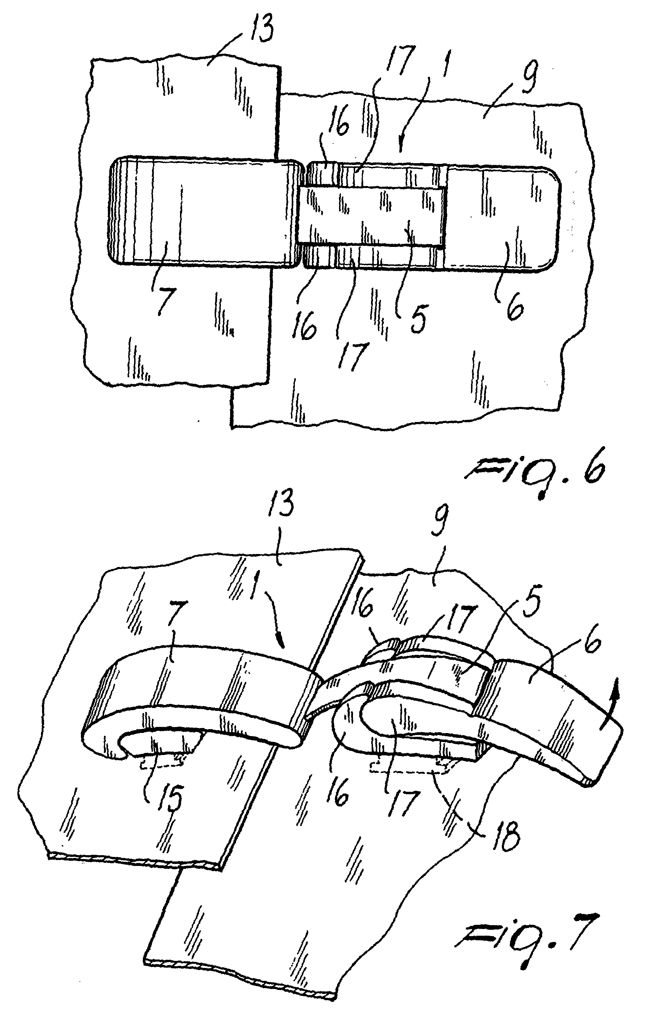

Advantageously, the lever arm 6 has, at the surface 10 that is directed away from the first flap 9 during closure of the device, an axial recess 11 that is adapted to constitute a seat for the tape or cable 5 during the closure of the device, as shown in figures 4 and 7.

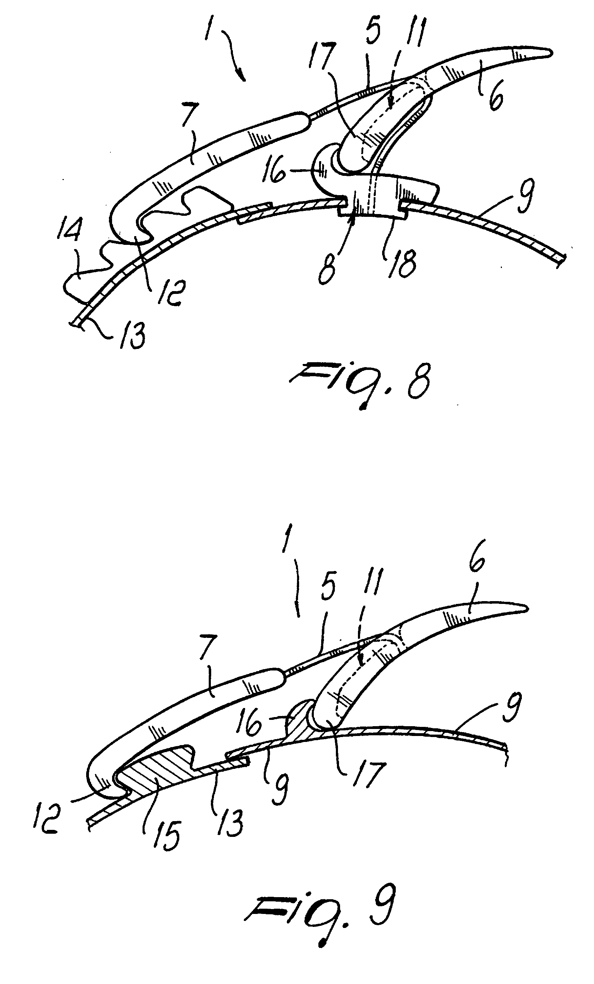

The traction element 7 has, at the end that is opposite to the one connected to the lever arm 6 by means of the tape or cable 5, temporary engagement means that are constituted by a curved protrusion 12 that interacts with complementarily shaped grip means that are associated with the second flap 13 of the shoe. The grip means are constituted for example by a tooth 15 that is rigidly coupled to, and protrudes from, the second flap 13, or by a rack 14 as shown in figure 8, or by a tooth 15 that is obtained monolithically from the flap 13, as in figure 9.

The support 8 has, on the opposite side with respect to the first flap 9, two curved shoulders 16 that allow the resting and rotation of two wings 17 that protrude parallel to each other from the lever arm 6 toward the traction element 7.

On the opposite side with respect to the pair of shoulders 16, the support 8 has means for locking to the first flap 9; said means are constituted by a tab 18 on which an annular recess 19 is provided; the recess acts as a seat for the detachable engagement of said first flap 9.

After the first injection-molding step, the method entails a second step for blanking the ends of the flexible connecting element 5 that protrude from the traction element 7 and from the support 8 away from the lever arm 6.

The second step occurs by means of an adapted blanking tool 20 and allows to obtain the finished device, ready for use.

The device can be advantageously stored in adapted removable containers.

As an alternative, after the first injection-molding step the tape or cable 5 that comprises the elements of the fastening device can be wound at an adapted reel 22 for subsequent use during the assembly of the product on which the device is to be applied.

Likewise, the tape or flexible cable 5 can be unwound from a similar reel 22 before the first injection step.

The method allows to produce a fastening device in which the components are mutually linked by the flexible connecting element, which allows an operator to easily and quickly assemble it to the flaps of a shoe and, by means of an adapted spacing between the lever arm 6, the traction element 7, and optionally the support 8, to achieve rotation for the lever arm 6 and thus fasten the flaps.

It has thus been seen in practice that the method allows to eliminate most of the connecting elements of a conventional fastening device, at the same time reducing the production steps required to obtain the complete device and thus also reducing the number of machines required for the treatments.

Furthermore, storage has also been improved and simplified, in view of the extremely easy assembly of the fastening device; the components that constitute the fastening device are in fact mutually linked by the connecting element; it also allows the operator to further simplify the operation for assembly to the shoe.

Finally, the low number of machines that are used, the reduced number of production steps, and the extremely easy and simple assembly allow to considerably reduce the production cost of the fastening device.

Furthermore, the flexible connection between the lever arm and the traction element improves the adaptability of the fastening device to positioning on the shoe and the ability to absorb any impacts without inducing deformations or breakages in the components of said device.

The method and the fastening device according to the invention are of course susceptible of numerous modifications and variations, all of which are within the scope of the appended claims.

The materials and the dimensions that constitute the individual components of the device may of course also be the most pertinent according to the specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Method for producing a fastening device for coupling a pair of flaps (9,13) of a shoe, comprising the simultaneous production of at least a lever arm (6) and a traction element (7) that constitute said device (1), said lever arm (6) and said traction element (7) being mutually linked by a flexible connecting element (5).

2. Method according to claim 1, **characterized in that** it comprises a first step for the injection-molding, on said flexible connecting element (5), of at least said lever arm (6) and said traction element (7) that constitute said device (1).

3. Method according to claim 2, **characterized in that** it comprises a second step of blanking said flexible connecting element (5); on which said lever arm (6) and said traction element (7) that constitute said device have been injection-molded, and a subsequent storage step in removable containers.

4. Method according to claim 2, **characterized in that** it comprises, after said first step, the storage of said device by winding on an adapted reel (22) said flexible connecting element (5), which comprises said at least two elements (6,7) that constitute said device (1).

5. Method according to claim 2, **characterized in that** it comprises, prior to said first step, the unwinding of said flexible connecting element from a reel (22).

6. Method according to claim 1, **characterized in that** a lever arm (6) and a traction element (7) are injection-molded to overlap on a cable (5).

7. Method according to claim 1, **characterized in that** a support (8) is injection-molded to overlap on a cable (5).

8. Fastening device for coupling a pair of flaps (9,13) of a shoe, comprising at least a lever arm (6) and a traction element (7) **characterised in that** said lever arm (6) and said traction element (7) are fabricated on, and mutually linked by, a flexible connecting element (5).

9. Device according to claim 8, **characterized in that** said connecting element is constituted by a tape or a cable (5).

10. Device according to one or more of the preceding claims 8-9, **characterized in that** said lever arm (6) and said traction element (7) are injection-molded on said connecting element (5).

11. Device according to claim 8, **characterized in that** on said connecting element (5) there is further fabricated a support (8) for the articulation of said lever arm (6) that has means for locking to one of the flaps (9) of a shoe.

12. Device according to claim 11, **characterized in that** said support (8) has, on the opposite side with respect to said flap, a curved end (16) that allows the resting and rotation of one end of said lever arm (6).

13. Device according to claim 12, **characterized in that** it comprises means for locking to one of the flaps (9) of a shoe constituted by a tab (18), which protrudes on the opposite side with respect to said curved end (16) and on which there is an annular recess (19) that acts as a detachable engagement seat for said flap.

14. Device according to claim 13, **characterized in that** said lever arm (6) has, on a surface (10) that is directed away from said flap (9), an axial recess (11) that acts as a seat for said cable (5) during the closure of said device.

15. Device according to claim 14, **characterized in that** said traction element (7) has, at an end that lies opposite to the one connected to said lever arm (6), means for temporary engagement with complementarily shaped grip means (15) that are associated with said other flap of the shoe to be joined.

## Patentansprüche

1. Verfahren zur Herstellung einer Schließvorrichtung zur Kopplung eines Paares von Laschen eines Schuhes, umfassend die gleichzeitige Herstellung von mindestens einem Hebelarm (6) und einem Zugelement (7), welche die Vorrichtung (1) bilden, wobei der Hebelarm (6) und das Zugelement (7) durch ein flexibles Verbindungselement (5) miteinander verbunden sind.

2. Verfahren nach Anspruch 1, **dadurch gekennzeichnet, dass** es einen ersten Schritt zum Spritzformen zumindest des Hebelarmes (6) und des Zugelementes (7), welche die Vorrichtung (1) bilden, auf das flexible Verbindungselement (5) umfasst.

3. Verfahren nach Anspruch 2, **dadurch gekennzeichnet, dass** es einen zweiten Schritt zum Beschneiden des flexiblen Verbindungselementes (5), auf welches der Hebelarm (6) und das Zugelement (7), welche die Vorrichtung bilden, spritzgeformt wurden, und einen nachfolgenden Schritt der Lagerung in abstellbaren Behältern umfasst.

4. Verfahren nach Anspruch 2, **dadurch gekennzeichnet, dass** auf den ersten Schritt die Lagerung der Vorrichtung durch Aufwinden des flexiblen Verbindungselementes (5), das mindestens zwei Elemente (6, 7) umfasst, welche die Vorrichtung (1) bilden, auf eine entsprechend gestaltete Rolle (22) folgt.

5. Verfahren nach Anspruch 2, **dadurch gekennzeichnet, dass** es vor dem ersten Schritt ein Abwinden des flexiblen Verbindungselementes von einer Rolle (22) umfasst.

6. Verfahren nach Anspruch 1, **dadurch gekennzeichnet, dass** ein Hebelarm (6) und ein Zugelement (7) spritzgeformt werden, um ein Kabel (5) zu überdecken.

7. Verfahren nach Anspruch 1, **dadurch gekennzeichnet, dass** eine Halterung (8) spritzgeformt wird, um ein Kabel (5) zu überdecken.

8. Schließvorrichtung zur Kopplung eines Paares von Laschen (9, 13) eines Schuhes, umfassend zumindest einen Hebelarm (6) und ein Zugelement (7), **dadurch gekennzeichnet, dass** der Hebelarm (6) und das Zugelement (7) auf ein flexibles Verbindungselement (5) aufgebracht werden und durch dieses miteinander verbunden sind.

9. Vorrichtung nach Anspruch 8, **dadurch gekennzeichnet, dass** das Verbindungselement durch ein Band oder ein Kabel (5) gebildet wird.

10. Vorrichtung nach einem oder mehreren der vorhergehenden Ansprüche 8 - 9, **dadurch gekennzeichnet, dass** der Hebelarm (6) und das Zugelement (7) auf das Verbindungselement (5) spritzgeformt sind.

11. Vorrichtung nach Anspruch 8, **dadurch gekennzeichnet, dass** auf das Verbindungselement (5) weiterhin eine Halterung (8) zur Anlenkung des Hebelarmes (6) aufgebracht wird, welche Mittel zur Verrastung mit einer der Laschen (9) des Schuhes umfasst.

12. Vorrichtung nach Anspruch 11, **dadurch gekennzeichnet, dass** die Halterung (8) auf der der Lasche gegenüberliegenden Seite ein gebogenes Ende (16) aufweist, welches die Lagerung und Drehung des einen Endes des Hebelarmes (6) ermöglicht.

13. Vorrichtung nach Anspruch 12, **dadurch gekennzeichnet, dass** sie eine Einrichtung zur Verrastung mit einer der Laschen (9) des Schuhes aufweist, die durch einen Vorsprung 18 gebildet wird, welcher auf der dem gebogenen Ende (16) gegenüberliegenden Seite vorsteht, und an welchem eine ringförmige Ausnehmung (19) vorhanden ist, die als lösbarer Eingriffssitz für die Lasche dient.

14. Vorrichtung nach Anspruch 13, **dadurch gekennzeichnet, dass** der Hebelarm (6) auf einer Fläche (10), welche von der Lasche (9) weggerichtet ist, eine axiale Ausnehmung (11) aufweist, die als Sitz für das Kabel (5) während des Schließens der Vorrichtung dient.

15. Vorrichtung nach Anspruch 14, **dadurch gekennzeichnet, dass** das Zugelement (7) an dem Ende, welches dem gegenüberliegt, das mit dem Hebelarm (6) verbunden ist, eine Einrichtung zum zeitweiligen Eingriff in die komplementär geformte Greifeinrichtung (15) besitzt, die mit der anderen Lasche des zu schließenden Schuhes verbunden ist.

## Revendications

1. Procédé pour la fabrication d'un dispositif de fermeture destiné à joindre une paire de rabats (9, 13) d'une chaussure, comprenant la fabrication simultanée d'au moins un bras de levier (6) et d'un élément de traction (7) lesquels constituent ledit dispositif (1), ledit bras de levier (6) et ledit élément de traction (7) étant reliés mutuellement par un élément de connexion flexible (5).

2. Procédé selon la revendication 1, **caractérisé en ce qu'**il comprend une première étape pour le moulage par injection, sur ledit élément de connexion flexible (5), d'au moins ledit bras de levier (6) et ledit élément de traction (7) lesquels constituent ledit dispositif (1).

3. Procédé selon la revendication 2, **caractérisé en ce qu'**il comprend une seconde étape pour le découpage dudit élément de connexion flexible (5), sur lequel ledit bras de levier (6) et ledit élément de traction (7), lesquels constituent ledit dispositif, ont été moulés par injection, et une étape subséquente de stockage dans des conteneurs amovibles.

4. Procédé selon la revendication 2, **caractérisé en ce qu'**il comprend, après ladite première étape, le stockage dudit dispositif par enroulement sur une bobine adaptée (22) dudit élément de connexion flexible (5), qui comprend au moins lesdits deux éléments (6,7) qui constituent ledit dispositif (1).

5. Procédé selon la revendication 2, **caractérisé en ce qu'**il comprend, antérieurement à ladite première étape, le déroulement dudit élément de connexion flexible d'une bobine (22).

6. Procédé selon la revendication 1, **caractérisé en ce qu'**un bras de levier (6) et un élément de traction (7) sont moulés par injection pour chevaucher un câble (5).

7. Procédé selon la revendication 1, **caractérisé en ce qu'**un support (8) est moulé par injection pour chevaucher un câble (5).

8. Dispositif de fermeture destiné à joindre deux rabats (9, 13) d'une chaussure, comprenant au moins un bras de levier (6) et un élément de traction (7) **caractérisé en ce que** ledit bras de levier (6) et ledit élément de traction (7) sont fabriqués sur un élément de connexion flexible (5) qui les relie mutuellement l'un à l'autre.

9. Dispositif selon la revendication 8, **caractérisé en ce que** ledit élément de connexion est constitué par une bande ou un câble (5).

10. Dispositif selon l'une ou plusieurs des revendications précédentes 8-9, **caractérisé en ce que** ledit bras de levier (6) et ledit élément de traction (7) sont moulés par injection sur ledit élément de connexion (5).

11. Dispositif selon la revendication 8, **caractérisé en ce que** sur ledit élément de connexion (5) a été de plus fabriqué un support (8) pour l'articulation dudit bras de levier (6) qui comporte un moyen pour se bloquer sur l'un des rabats (9) d'une chaussure.

12. Dispositif selon la revendication 11, **caractérisé en ce que** ledit support (8) est muni, du côté opposé audit rabat, d'une extrémité courbée (16) laquelle permet l'appui et la rotation d'une des extrémités dudit bras de levier (6).

13. Dispositif selon la revendication 12, **caractérisé en ce qu'**il comprend un moyen de blocage sur l'un des rabats (9) d'une chaussure, constitué d'une patte (18) faisant saillie du côté opposé à ladite extrémité courbée (16) et munie d'un évidement annulaire (19) qui agit comme un siège d'engagement détachable pour ledit rabat.

14. Dispositif selon la revendication 13, **caractérisé en ce que** ledit bras de levier (6) est muni, sur une surface (10) dirigée à l'opposé dudit rabat (9), d'un évidement axial (11) qui agit comme un siège pour ledit câble (5) lors de la phase de fermeture dudit dispositif.

15. Dispositif selon la revendication 14, **caractérisé en ce que** ledit élément de traction (7) est muni à son extrémité opposée à celle connectée audit bras de levier (6) d'un moyen pour l'engagement temporaire avec un moyen d'accroche de forme complémentaire (15) qui est associé avec ledit second rabat de la chaussure à joindre.
